# EUROPEAN PATENT APPLICATION

(11) **EP 0 781 577 A2**
(43) Date of publication of application: **02.07.1997**
(21) Application number: 96307567.6
(22) Date of filing: 18.10.1996
(51) Int. Cl.: A63B 53/14, A63B 59/00

(54) **Improved golf club grip**

(30) Priority: 28.12.1995 US 567339; 26.02.1996 US 595445
(71) Applicant: Huang, Ben, Huntington Beach, California 92648 (US)
(72) Inventor: Huang, Ben, Huntington Beach, California 92648 (US)
(74) Representative: Mayes, Stuart David

(57) **Abstract**

There is described a grip that is to be positioned on and adhered to the upper portion of a golf club shaft (30). The grip is defined by a strip (S) consisting of an open pored felt layer (40) having a generally flat inner surface and a smooth closed pore polyurethane layer (44) having its inner surface bonded to the outer surface of the felt layer (40). The pores (46) of the polyurethane layer (44) extend generally normal to the longitudinal axis of the strip (S) and the felt layer provides strength for the polyurethane layer while the polyurethane layer both absorbs shocks and provides tackiness so as to inhibit slippage of a user's hand relative to the shaft. The ratio of the thickness of the polyurethane layer to the felt layer has a minimum of about 0.18 and the strip is spirally wrappable about the shaft and adhered thereto.

## Description

The present invention relates to golf club grips that are subject to shock when a golf club is impacted against a golf ball. It is well known that shock generated by impact between a golf club and a golf ball can affect muscle tissue in the hands, elbows, and arms. Such shock often results in a painful affliction commonly experienced by active golf players. The energy generated when a golf club strikes a golf ball is usually of high frequency and short duration with rapid decay. Tight grasping of a golf club grip to keep it from slipping contributes to muscle strain. Various types of golf club grips have been proposed for inhibiting such muscle strain, however, such grips have not solved the problem, primarily because they are hard and substantially incompressible and therefore lack adequate shock absorbing characteristics.

Conventional golf club grips are molded from a single piece of rubber or synthetic plastic. When it is necessary to replace the original grip, such replacement is difficult and cannot be accomplished by the average golfer. Accordingly, the golfer is required to leave his golf club at a golf shop for several days for application of the replacement grip. Another disadvantage of conventional golf club grips is their tendency to become slippery when dampened, as for example, when playing under rainy conditions or by contact with perspiration formed on the golfer's hands. Slippery contact of a golfer's hands with a golf club grip reduces his feel of the golf club.

There is described an improved golf club grip designed to solve the above set forth problems and other serious problems inherent to conventional golf club grips. Specifically, the golf club grip may be readily applied by a golfer thereby eliminating the delay and cost involved with replacing a conventional golf club grip. The golf club grip also strengthens the golfer's grip on a golf club by providing increased tackiness between the his hands and the golf club grip. The golf club grip enhances the player's feel and touch during play, thereby eliminating the need to wear a glove which is needed to protect against abrasion of a golfer's hand when using a conventional golf club grip and also to stay tacky when wet. The golf club grip is preferably formed of a synthetic polyurethane material bonded over felt that is readily compressible when gripped by a golfer thereby increasing his touch over the golf club, absorbing more vibration and shock, and also reducing fatigue. The grip is lighter in weight than conventional rubber grips, so that more of the total golf club weight is distributed to the golf club head thereby increasing club head speed.

The preferred form of golf club grip embodying the present invention utilizes an elongated resilient strip comprising a layer of a textile, such as felt, bonded to a layer of polyurethane. The felt layer is adhered to and provides strength to the polyurethane layer. The polyurethane layer is of closed pore construction which provides a cushioned grip and enhanced tackiness to the golfer's hand. The strip is spirally wrapped about and adhered to the grip-receiving upper portion of a golf club shaft by means of an adhesive. The adhesive is originally covered with a protective quick-release tape. The tape is peeled off the adhesive and the strip is then spirally wrapped about the shaft with the edges of the tape in tight abutment so as to provide a smooth contour. This arrangement provides an improved securement of the grip to the golf club shaft, with such securement increasing the tighter the grip is grasped by the golfer.

The grip also utilizes sidewardly and outwardly curved, compressed reinforcement traction side edges along its length. Such side reinforcement edges inhibit unraveling of the grip from the racquet or golf club handle, enhances the frictional grip of the user and provides an improved appearance over existing grips. The traction side edges also reduce interference with other golf club grips as a club is withdrawn from a golfer's bag. The grip may either be used as a replacement grip, or, alteratively be fabricated as original equipment by a manufacturer of golf clubs.

An embodiment of the invention is illustrated in the accompanying drawings in which:
Fig. 1 is a perspective view showing a golf club provided with a lightweight grip embodying the present invention;
Fig. 2 is a top plan view of a resilient strip from which the grip of Fig. 1 is formed;
Fig. 3 is a vertical sectional view taken in further enlarged scale along line 3-3 of Fig. 2;
Fig. 4 is a vertical sectional view of the grip;
Fig. 5 is a perspective view showing a cap utilized with the grip;
Fig. 6 is a perspective view showing the cap of Fig. 5 inverted from its position of Fig. 5;
Fig. 7 is a broken side elevational view showing the strip being wrapped about the upper portion of a golf club shaft;
Fig. 8 is a vertical sectional view taken in enlarged scale along line 8-8 of Fig. 7; and
Fig. 9 is a side elevational view in enlarged scale showing the strip wrapped about the upper portion of a golf club shaft;

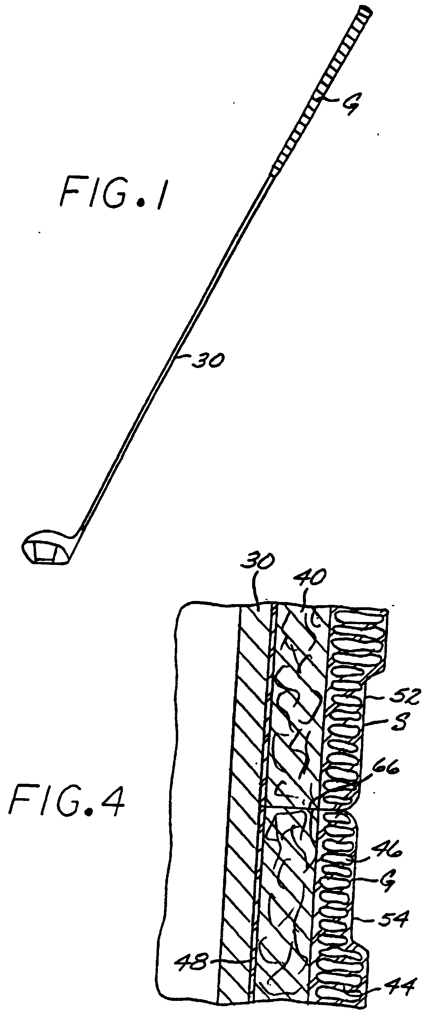

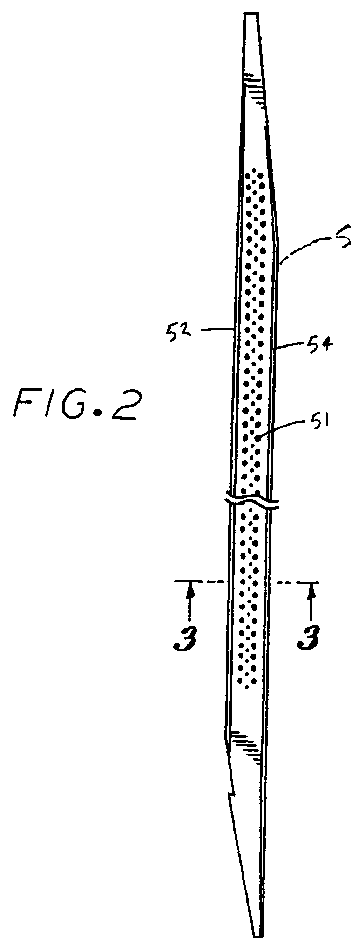

Referring to the drawings, an elongated resilient strip S utilized to provide a preferred form of golf club grip is shown in Fig. 2. Such strip S is adapted to be spirally wrapped about the upper portion of the shaft 30 of a golf club to provide an improved golf club grip G as shown in Fig. 1.

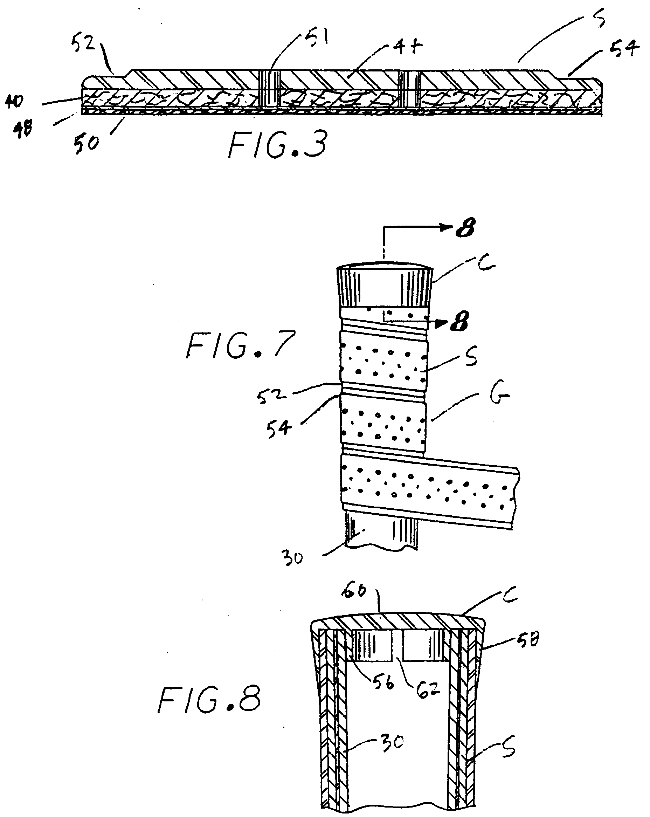

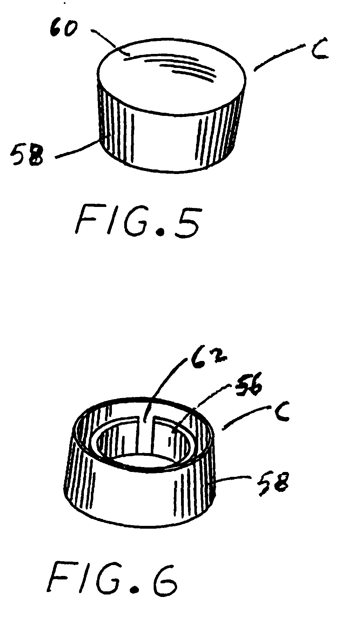

Resilient strip S includes a textile layer 40 formed of a suitable open-pored material, such as felt, and has its upper surface bonded to the lower surface of a polyurethane layer 44. As indicated in Fig. 4, the polyurethane layer is formed with closed pores 46 which extend vertically, i.e., generally normal to the longitudinal axis of the strip S. The pores 46 permit the polyurethane layer to be readily compressed by the gripping force of a golfer's hands. The polyurethane layer 44 may be fabricated in a conventional manner by coating one side of a felt strip with a solution of polyurethane, e.g., polyester or polyether, dissolved in dimethyl formaide (DMF), immersing the coated strip in water baths to displace the DMF and to cause the urethane to coagulate, and finally driving off the water by the application of water and heat. In this manner, the closed pores 46 are formed, while the underside of the polyurethane strip is bonded to the upper surface of the felt layer. In order to form the closed pores 46 the ratio of the thickness of the polyurethane layer to the felt layer should be a minimum of 0.18. The underside of the felt layer 40 is provided with a conventional adhesive 48 which is originally covered with a protective quick-release tape 50, as shown in Fig. 3. The layer of polyurethane 44 provides a cushioned grasp of the player's hands on the shaft C and also enhances the player's grip by providing increased tackiness between the player's hands and the golf club grip, as compared to conventional golf club grips. The felt layer 40 provides strength to the polyurethane layer 44 and also serves as a means for attaching the bonded-together polyurethane and felt strip to shaft 30.

Referring now to Figs. 2 and 3, the outer surface of the polyurethane layer 44 may be formed over its upper portion with a plurality of air passages 51. Air passages 51 channel perspiration dampness into the felt layer 40 for evaporation therein to ether reduce slippage of the golfer's hand on the grip G.

Referring now to Figs. 3 and 4, the strip S is shown formed with sidewardly and outwardly extending recessed, reinforcement, traction side edges, generally designated 52, and 54. The reinforcement side edges may be formed by means of a heated platen (not shown) which compresses the outer portions of the side edges of the polyurethane layer below the original exterior surface dimension of the strip. Such compression increases the strength of the polyurethane layer in the vicinity of the side edges 52 and 54, prevents unraveling of the strip from the shaft, enhances the golfer's grasp of the grip, and reduces interference with other clubs as a club is withdrawn from a golfer's bag.

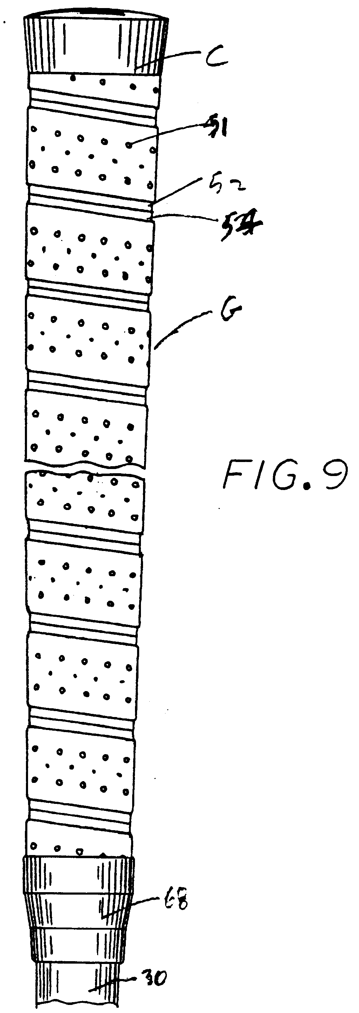

An annular cap C of integral construction is secured to the upper end of the golf club shaft 30 forming the top of grip G. Cap C includes a vertical inner skirt 56, a vertically tapered outer skirt 58, and a horizontal, slightly domed cover 60 as shown particularly in Figs. 5-8. Cover C is preferably molded from a stiff synthetic plastic material. A vertically extending expansion slot 62 is formed in inner skirt 56. It is desirable that the inner skirt taper at the same angle as the interior of the shaft 30 and be tightly telescopically received by the open upper end of the shaft. Expansion slot 62 permits a tight fit to be obtained between the inner skirt and the interior of the golf club shaft. The inner diameter of outer skirt 58 tightly telescopically encloses the first wrap of strip S after the strip S has been spirally wrapped about the upper portion of the golf club shaft in the manner shown in Fig. 8 to ensure the strip does not unravel relative to the shaft. Referring to Figs. 3 and 7, to apply the strip to the shaft 30, the protective tape 50 is peeled off the adhesive 48. Thereafter, the strip is wrapped about the upper portion of the shaft in the manner shown in Fig. 7 with the traction side edges tightly butted together as indicated at 66 in Fig. 4. Referring now to Fig. 9, preferably the lower wrap of the strip S will be secured to the shaft 30 by means of fasteners, such as finishing tape (not shown) and a ferrule 68.

The grip G is lighter in weight than conventional rubber or synthetic plastic golf club grips. Accordingly, more weight is distributed to club head, thereby increasing clubhead speed without increasing the weight of the golf club. Such weight savings moves the center of gravity of the golf club closer to the clubhead, increases the club's moment of inertia, and reduces the overall weight of the club, and thereby permits a higher clubhead speed for greater golf ball travel. It has been determined that the standard driver golf club has a weight of about 312-340 grams and a swing weight of D-1, while a driver utilizing the grip embodying the invention can be made to weigh about 225 grams providing a swing weight of D-8. "Swing weight" is generally calculated as the weight attached to the butt end of a golf club shaft, required to balance the club on a fulcrum placed 12 inches from the butt end of the golf shaft. It should be particularly noted that the upper grip receiving portion of shaft 30 may be expanded radially at a greater angle than the taper of the main portion of the shaft to enhance the grasp of the grip by a golfer.

The grip can either be applied to a golf club shaft as original equipment by a manufacturer of golf clubs, or alternatively be readily wrapped about a golf club shaft as a replacement grip.

## Claims

1. A grip that is to be positioned on and adhered to the upper portion of a golf club shaft characterized by the feature that the grip is defined by a strip consisting of an open-pored felt layer having a generally flat inner surface and a smooth closed pore polyurethane layer having its inner surface bonded to the outer surface of the felt layer, with the pores of such polyurethane layer extending generally normal to the longitudinal axis of the strip, and with the felt layer providing strength for the polyurethane layer while the polyurethane layer both absorbs shocks and provides tackiness so as to inhibit slippage of a user's hand relative to the shaft, with the ratio of thickness of the polyurethane layer to the felt layer being a minimum of about 0.18; and with the strip being spirally wrappable about the shaft and adhered thereto.

2. The golf club grip according to Claim 1, wherein the grip also includes a cap formed with an inner skirt tightly telescopically received by the interior upper end of the hollow shaft, an outer skirt that depends downwardly over the upper portion of the strip to restrain the strip against unwinding relative to the shaft and with the inner and outer skirts extending over the upward extremity of the shaft and the strip to restrain the upper end of the strip from unraveling from the shaft; and fasteners interposed between the lower end of the strip and the shaft to restrain the lower portion of the strip from unraveling from the shaft.

3. The golf club grip according Claim 1 or 2, wherein the strip is formed with air passing perforations in to channel moisture into the felt layer for evaporation.

4. The golf club grip according to Claim 1, 2 or 3 wherein the polyurethane layer is formed with recessed heat-compressed traction side edges.

5. The golf club grip according to Claim 1, 2, 3 or 4 having a weight of about 225 grams.

6. A golf club having a golf club grip in accordance with any of claims 1 to 5.
